(19) Europäisches Patentamt

European Patent Office

Office européen des brevets

(11) Veröffentlichungsnummer: **0 241 808**

**A2**

(12) **EUROPÄISCHE PATENTANMELDUNG**

(21) Anmeldenummer: **87104803.9**

(22) Anmeldetag: **01.04.87**

(51) Int. Cl.4: **F16F 15/12**

(30) Priorität: **12.04.86 DE 3612370**

(43) Veröffentlichungstag der Anmeldung:
**21.10.87 Patentblatt 87/43**

(84) Benannte Vertragsstaaten:
**DE FR GB IT SE**

(71) Anmelder: **BAYERISCHE MOTOREN WERKE Aktiengesellschaft**
**Postfach 40 02 40 Petuelring 130 - AJ-30**
**D-8000 München 40(DE)**

(72) Erfinder: **Klages, Richard**
**Apothekenweg 2c**
**D-8056 Neufahrn(DE)**
Erfinder: **Spindelböck, Dieter**
**Reichenbergerstrasse 3**
**D-8068 Pfaffenhofen(DE)**

(74) Vertreter: **Bücken, Helmut**
**Bayerische Motoren Werke**
**Aktiengesellschaft Postfach 40 02 40**
**Petuelring 130 - AJ-30**
**D-8000 München 40(DE)**

(54) **Schwingungsdämpfer, insbesondere für die Kurbelwelle einer Hubkolben-Brennkraftmaschine.**

(57) Ein Schwingungsdämpfer 1, insbesondere für die Kurbelwelle einer Hubkolben-Brennkraftmaschine, umfaßt eine Nabe 2 und einen Schwungring 3, die jeweils aus einem gezogenen Blechteil gebildet sind. Der Schwungring 3 ist über einen zwischengeschalteten Gummikörper 4 zur Nabe 2 konzentrisch angeordnet,

Der Schwungring 3 soll als preiswert herzustellendes Blechpreßteil für mehrere Funktionen so gestaltet werden, daß auch weitere zur akustischen Entkoppelung dienende Maßnahmen vorteilhaft durchführbar sind.

Hierzu wird der Schwungring 3 als ein einseitig offenes Blechpreßteil ausgeführt, der aus einem Geberrad 5 mit gezahntem Außenumfang für eine elektronische Meßvorrichtung und einer mit dem Geberrad einstückig verbundenen Keilriemenscheibe 7 gebildet ist, wobei die Keilriemenscheibe 7 durch einen im wesentlichen radialen Stützflansch 11 in einem radialen Abstand (Freigang 16) zu einem Verbindungsflansch 8 angeordnet ist. Der Verbindungsflansch 8 weist eine Anbindungsfläche für den Gummikörper 4 auf, der andererseits mit einem Tragflansch 17 der Nabe 2 in fester Verbindung steht.

Fig. 1

Die Erfindung geht gemäß dem Oberbegriff des unabhängigen Patentanspruches von der DE-PS 33 14 503 aus.

Bei dieser bekannten Bauart ist der Schwungring als ein topfförmiges Massivteil aus tiefgezogenem Blech gebildet, der zum Abbau von Torsions-und/oder Biegeschwingungen dient.

Weiter ist aus der DE-OS 27 44 406 eine aus einem Schwingungsdämpfer und einer Keilriemenscheibe kombinierte Anordnung bekannt. Bei dieser Anordnung werden ein Rillenkörper der Keilriemenscheibe und ein gesonderter Massering des Schwingungsdämpfers jeweils über eine Gummischicht mit jeweils einer aus tiefgezogenem Blech gefertigten Nabe verbunden. Die Naben sind im Durchmesser unterschiedlich groß und werden, koaxial angeordnet, gemeinsam an der Kurbelwelle der Brennkraftmaschine befestigt. Um die Schallabstrahlung der Hubkolben-Brennkraftmaschine nach vorne zu verringern, werden bei dieser bekannten Anordnung freie Bereiche der die Keilriemenscheibe tragenden Nabe abgedeckt.

Schließlich ist es bekannt, daß für elektronische Steuerungen an Brennkraftmaschinen für die Einspritzung und/oder Zündung exakte Drehzahlsignale benötigt werden. Hierfür sind Meßvorrichtungen mit einem Drehzahlgeber bekannt, der mit einem Geberrad zusammenwirkt. Es wurde bereits vorgeschlagen, ein derartiges Geberrad mit einem auf der Kurbelweller der Hubkolben-Brennkraftmaschine befestigten Schwingungsdämpfer zu verbinden.

Der Erfindung liegt die Aufgabe zugrunde, für einen Schwingungsdämpfer der eingangs beschriebenen Bauart den Schwungring als preiswert herzustellendes Blechpreßteil in einer Gestaltung für mehrere Funktionen so auszubilden, daß auch zur weiteren akustischen Entkoppelung dienende Maßnahmen vorteilhaft durchführbar sind.

Diese Aufgabe wird mit den kennzeichnenden Merkmalen des unabhängigen Patentanspruches gelöst. Der aus einem Riemenrad und einem Geberrad kombinierte Schwungring ist als Blechpreßteil nach einer Seite offen, wobei ein mit dieser offenen Seite in Richtung Brennkraftmaschine an der Kurbelwelle angeordneter Schwingungsdämpfer in vorteilhafter Weise zur Schalldämmung, insbesondere des kurbelwellennahen Bereiches des Maschinengehäuses, dient. Da der erfindungsgemäße Schwungring ferner vom benachbarten Maschinengehäuse in unterschiedlichen axialen Abständen verschiedene radiale Bereiche aufweist, kann damit ein größeres Frequenzspektrum der Schallabstrahlung erfaßt werden. Weiter wird mit dem radialen Freigang zwischen dem Verbindungsflansch des Schwingringes und dem benachbarten Riemenkörper einerseits ein großer Ringraum des Schwungringes erreicht, und andererseits eine Brücke zur Fortleitung des Körperschalls vermieden.

Vorteilhafte Ausgestaltungen der Erfindung sind in den Unteransprüchen angegeben. So wird mit der im Anspruch 2 beschriebenen Ausgestaltung des Überganges vom Verbindungsflansch zum Stützflansch eine besonders steife Verbindung des Verbindungsflansches mit dem übrigen, den Riemenkörper und das Geberrad umfassenden Schwungring erreicht. Mit den Merkmalen des Anspruches 3 wird eine steife Ausgestaltung der Nabe beschrieben. Weiter kann zur akustischen Verbesserung des Schwingungsdämpfers dieser nach Anspruch 4 an seinen freien Flächen mit einem schallschluckenden Material belegt sein. Im Hinblick des einseitig offen gestalteten Schwungringes des erfindungsgemäßen Schwingungsdämpfers wird nach Anspruch 5 eine bevorzugte Ausführung beschrieben, wonach das zur Schallabsorbtion fähige Material als Gußmasse im Schungring angeordnet ist. Das Material für die Gußmasse kann so gewählt sein, daß diese, ohne eine Körperschallbrücke zu bilden, den Rillenkörper für ein Riemenrad gegen den Verbindungsflansch des Schwungringes zusätzlich abstützt.

Mit dem einseitig offenen Schungring des erfindungsgemäßen Schwingungsdämpfers sind also weitere, der akustischen Entkoppelung dienende Maßnahmen vorteilhaft durchführbar.

Die Erfindung ist anhand zweier in der Zeichnung dargestellter Ausführungsbeispiele beschrieben. Es zeigen:

Fig. 1 ein erstes Ausführungsbeispiel eines Schwingungsdämpfers mit einem maschinenseitig offenen Schwungring, und

Fig. 2 ein zweites Ausführungsbeispiel eines Schwingungsdämpfers mit einem maschinenseitig durch eine Gußmasse aus schallschluckendem Material verschlossenen Schwungring.

Ein Schwingungsdämpfer 1 für die Anordnung an einer nicht gezeigten Kurbelwelle einer Hubkolben-Brennkraftmaschine umfaßt eine Nabe 2 und einen Schwungring 3. Die Nabe 2 und der Schwungring 3 sind jeweils aus einem gezogenen Blechteil gebildet. Der Schwungring 3 ist über einen zwischengeschalteten Gummikörper 4 zur Nabe 2 konzentrisch angeordnet.

Der Schwungring 3 ist aus einem Geberrad 5 mit gezahntem Außenumfang für eine elektronische Meßeinrichtung und einem mit dem Geberrad einstückig verbundenen Rillenkörper 6 einer Keilriemenscheibe 7 für einen Riementrieb gebildet. Weiter umfaßt der Schwungring 3 einen eine Anbindungsfläche für den Gummikörper 4 tragenden Verbindungsflansch 8, der als zur Drehachse 9 koaxialer Konus gebildet ist. Der Verbindungsflansch 8 ist stirnseitig über einen Teil seiner axialen Erstreckung im wesentlichen auf sich selbst zurückgefaltet, bei 10, und geht anschließend in eine Stützflansch 11 über. Der Stützflansch 11 ist über einen Teil seiner radialen Erstreckung auf sich selbst zurückgefaltet und bildet mit dem zurückgefalteten Teil einen Schenkel 12 eines V-förmigen Profiles 13 der Keilriemenscheibe 7. Der Schenkel 12 steht über eine Profilausrundung 14 mit einem zweiten Schenkel 15 in Verbindung, der seinerseits mit dem Geberrad 5 einstückig verbunden ist. Die radiale Erstreckung des Stützflansches 11 ist im Verhältnis zur Tiefe des V-förmigen Profiles 13 so gewählt, daß zwischen dem Verbindungsflansch 8 des Schwungringes 3 und der Profilausrundung 14 des V-förmigen Profiles 13 der Keilriemenscheibe 7 ein Freigang 16 gegeben ist. Damit ist ein vom Stützflansch 11 zum Geberrad 5 hin offener Schwungring 3 erzielt, der zur Schalldämmung der kurbelwellennahen Bereiche des benachbarten Motorgehäuses dient.

Die ebenfalls als Blechpreßteil ausgebildete Nabe 2 ist mit einem eine Anbindungsfläche für den Gummikörper 4 aufweisenden Tragflansch 17 ausgerüstet, der an der motorseitigen Stirnseite über einen umlaufenden Wulst 18 mit einem axial versetzt angeordneten Anschlußflansch 19 zur Befestigung an der Kurbelwelle in Verbindung steht.

Zur akustischen Verbesserung des Schwingungsdämpfers 1 können seine freien Flächen mit einem schallschluckenden Material versehen sein.

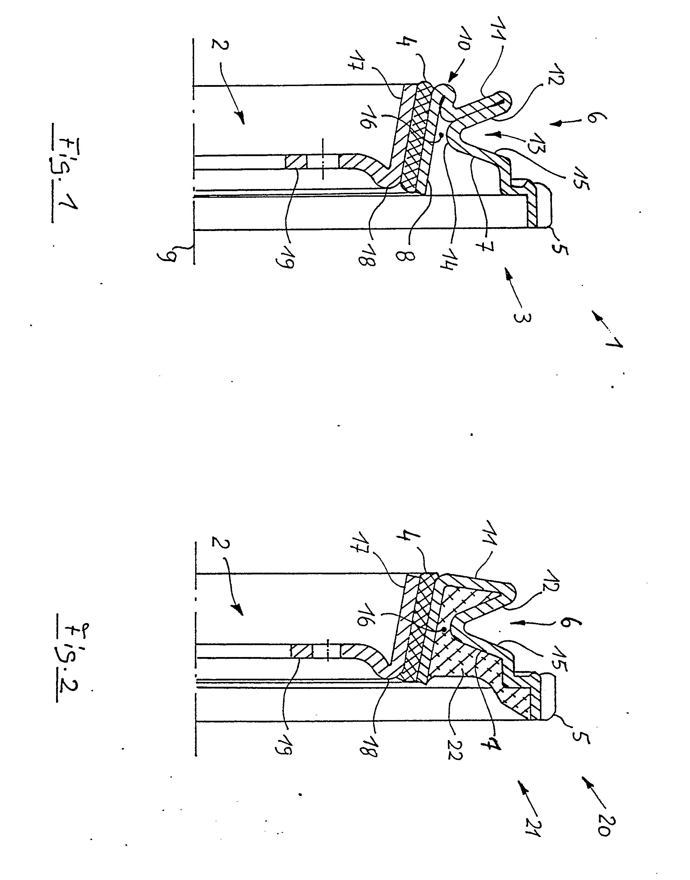

Wie aus Fig. 2 hervorgeht, sind bei dem Schwingungsdämpfer 20 die freien Flächen des einseitig offenen Schwungringes 21 mit einem derartigen Material belegt, das in dem Schwungring 21 als Gußmasse 22 angeordnet ist. Als Material können Schaum oder Harz vorgesehen sein. Mit der Gußmasse kann neben einer Erhöhung der Masse des Schwungringes zusätzlich eine Abstützung der Keilriemenscheibe 7 gegen den Tragflansch 8 erreicht sein. Im übrigen sind mit der Fig. 1 vergleichbare Teile mit denselben Bezugsziffen belegt.

**Ansprüche**

1. Schwingungsdämpfer, insbesondere für die Kurbelwelle einer Hubkolben-Brennkraftmaschine,
-umfaßend eine Nabe (2) und einen Schwungring (3,21), die jeweils aus einem gezogenen Blechteil gebildet sind, und wobei
-der zur Nabe konzentrisch angeordnete Schwungring über einen Gummikörper (4) mit der Nabe in Verbindung steht,
-wobei die Anbindungsflächen des Gummikörpers an Nabe und Schwungring zur Drehachse (9) vorzugsweise koaxiale Konusflächen sind,
dadurch gekennzeichnet,
-daß der Schwungring (3,21) aus einem Geberrad (5) mit gezahntem Außenumfang für eine elektrisch/elektronische Meßvorrichtung und einem mit dem Geberrad einstückig verbundenen Rillenkörper (6) für einen Riementrieb gebildet ist,
-daß der Schwungring ferner einen die Anbindungsfläche für den Gummikörper (4) tragenden Verbindungsflansch (8) aufweist,
-der stirnseitig einen im wesentlichen radialen Stützflansch (11) aufweist,
-an dem der Rillenkörper mit radialen Abstand (Freigang 16) zum Verbindungsflansch angeordnet ist.

2. Schwingungsdämpfer nach Anspruch 1, dadurch gekennzeichnet,
-daß der Verbindungsflansch (8) stirnseitig über einen Teil seiner axialen Erstreckung im wesentlichen auf sich selbst zurückgefaltet ist (bei 10),
-daß der anschließende Stützflansch (11) über einen Teil seiner radialen Erstreckung auf sich selbst zurückgefaltet ist und mit dem zurückgefalteten Teil einen Schenkel (12) eines V-förmigen Profiles (13) einer Keilriemenscheibe (7) bildet,
-deren anschließender zweiter Schenkel (15) mit dem Geberrad (5) verbunden ist.

3. Schwingungsdämpfer nach Anspruch 1 oder 2, dadurch gekennzeichnet,
-daß die Nabe (2) mit einem die Anbindungsfläche für den Gummikörper (4) aufweisenden Tragflansch (17) ausgerüstet ist,
-der stirnseitig über einen umlaufenden Wulst (18) mit einem axial versetzt angeordneten Anschlußflansch (19) in Verbindung steht.

4. Schwingungsdämpfer nach einem oder mehreren der Ansprüche 1 - 3, dadurch gekennzeichnet, daß die freien Flächen des Schwingungsdämpfers (1,20) mit einem schallschluckenden Material versehen sind.

5. Schwingungsdämpfer nach Anspruch 4, dadurch gekennzeichnet, daß das Material als Gußmasse (22) im Schwungring (21) des Schwingungsdämpfers (20) angeordnet ist.

Fig. 1

Fig. 2